(19) Europäisches Patentamt
European Patent Office
Office européen des brevets

(11) **EP 2 601 739 B1**

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **11738222.6**

(22) Anmeldetag: **28.07.2011**

(51) Int Cl.:
*H02P 6/22* (2006.01)    *H02P 1/04* (2006.01)
*H02P 1/50* (2006.01)    *H02P 25/02* (2006.01)

(86) Internationale Anmeldenummer:
**PCT/EP2011/063055**

(87) Internationale Veröffentlichungsnummer:
**WO 2012/016914 (09.02.2012 Gazette 2012/06)**

(54) **VERFAHREN UND SCHALTUNGSANORDNUNG ZUR ÜBERPRÜFUNG DER ROTORPOSITION EINER SYNCHRONMASCHINE**

METHOD AND CIRCUIT ARRANGEMENT FOR CHECKING THE ROTOR POSITION OF A SYNCHRONOUS MACHINE

PROCÉDÉ ET CIRCUITERIE POUR VÉRIFIER LA POSITION DU ROTOR D'UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2010 EP 10464007**

(43) Veröffentlichungstag der Anmeldung:
**12.06.2013 Patentblatt 2013/24**

(73) Patentinhaber: **Continental Teves AG & Co. oHG 60488 Frankfurt (DE)**

(72) Erfinder:
• **KAUFMANN, Tom**
  **55566 Ippenschied (DE)**
• **STAUDER, Peter**
  **55128 Mainz (DE)**
• **BITSCH, Christian**
  **64646 Heppenheim (DE)**
• **BUDIANU, Bogdan**
  **R-700731 Iasi (RO)**
• **LEIDECK, Jochen**
  **64283 Darmstadt (DE)**

(56) Entgegenhaltungen:
EP-A1- 1 612 927    DE-A1- 10 215 428
DE-A1-102008 001 408    US-A- 4 565 957

**Beschreibung**

Die Erfindung betrifft ein Verfahren gemäß Oberbegriff von Anspruch 1 und eine Schaltungsanordnung gemäß Oberbegriff von Anspruch 16.

Elektronisch kommutierte Synchronmaschinen mit einem permanent erregten Rotor und einem mit Phasenwicklungen versehenen Stator, auch als bürstenloser Gleichstrommotor bekannt, erfreuen sich großer Beliebtheit. Sie zeichnen sich durch einen geringen Verschleiß sowie wenig elektromagnetische oder akustische Störungen aus und haben einen hohen Wirkungsgrad. Eine Bestromung der typischerweise 3 Statorwicklungen erzeugt ein Magnetfeld, in dem der permanent erregte Rotor sich ausrichtet. Durch geeignetes Umschalten (Kommutieren) der durch die Statorwicklungen fließenden Ströme (bzw. der angelegten Spannungen) entsteht eine Drehbewegung. Elektronisch kommutierte Motoren werden auch als Antrieb für elektromechanisch betätigte Radbremsen eines Kraftfahrzeugs verwendet, wobei ein geeignetes Getriebe die Rotation des Motors in eine Translation der Bremsbeläge umsetzt. Für diesen Einsatzzweck werden die Motoren auf hohes Drehmoment bei Stillstand oder niedrigen Drehzahlen ausgelegt.

Um eine elektronische Kommutierung des Motors durchführen zu können, muss die Rotorlage bekannt sein; für einen stillstehenden oder sich langsam drehenden Motor ist es zweckmäßig, die Rotorposition mittels Sensoren zu ermitteln. Bei einer weit verbreiteten Anordnung tasten drei statorfest montierte Hall-Sensoren ein mit dem Rotor verbundenes Encoderrad oder direkt das Streufeld der Rotormagnete ab.

In der DE 10 2008 001 408 A1 wird ein Verfahren zur Korrektur einer Fehlstellung (Sensorwinkel) eines mit einer Welle eines Rotors verbundenen Winkelgebers eines Elektromotors beschrieben, wobei ein Offsetwinkels herangezogen wird, welcher eine Differenz eines Feldwinkels zu dem Sensorwinkel abbildet. Der Feldwinkel ist dabei als Winkel zwischen dem Rotormagnetfeld und dem Magnetfeld, das von dem Stator erzeugt wird, definiert. Es werden weiterhin zwei alternative und bevorzugt nacheinander ausgeführte Verfahren zur Ermittlung dieses Feldwinkels, welche unabhängig vom Sensorwinkel funktionieren, beschrieben. Bei der ersten Alternative wird der Rotor lastfrei geschaltet und durch Bestromen der Statorspulen ein bekanntes Statormagnetfeld vorgegeben. Der Rotor richtet sich entsprechend aus, bis keine Kraft mehr auf diesen wirkt. Bei dem somit bekannten Feldwinkel wird ein diesem zugeordneter Sensorwinkel erfasst. Bei der zweiten Alternative wird der Rotor in Rotation versetzt, die Statorspulen anschließend freigeschaltet und die durch den Rotor in diesen induzierte Spannung erfasst. Ist die in zwei Spulen induzierte Spannung gleich, entspricht der zu diesem Zeitpunkt korrespondierende Feldwinkel der Winkelmitte zwischen diesen Statorspulen, wobei der Sensorwinkel bezogen auf diesen Feldwinkel erfasst wird.

Um eine Uneindeutigkeit der Rotorposition eines sensorlos betriebenen Synchronmotor bei Vorgeben eines Statormagnetfelds einer definierten Orientierung und entsprechender Ausrichtung des Rotors aufzulösen, wird in der US 4,565,957 die Vorgabe eines weiteren Statormagnetfelds mit einer von der ersten Orientierung abweichenden zweiten Orientierung beschrieben, wodurch die Rotorposition eindeutig bestimmt werden kann.

Die WO 2005/046041 A2 beschreibt ein Verfahren zum Betrieb einer Synchronmaschine mit einem permanent erregten Rotor und einem mit Phasenwicklungen versehenen Stator und einem nicht absoluten Sensor, bei dem eine Ermittlung der Startrotorlage durchgeführt wird. Zur Eliminierung von Winkelfehlern bei der Ermittlung der Startrotorlage wird bei lastloser Synchronmaschine mindestens ein Strom- und/oder Spannungsvektor mit definierter Zeitdauer in Richtung der ermittelten Rotorlage eingespeist, wodurch eine Ausrichtung des Rotors in die entsprechende Lage erzwungen wird. Dieses Verfahren kann kleine Winkelfehler eliminieren, den Defekt eines Sensors jedoch nicht zuverlässig erkennen.

Wenn die von den Sensoren erkannte Rotorlage nicht mit der tatsächlichen übereinstimmt, kann dies zu verschiedenen Arten von Fehlverhalten führen. In manchen Fällen kann es dadurch zu einer Beschädigung des Motors, der angetriebenen Vorrichtung oder der Motoransteuerung kommen.

Daher ist es Aufgabe der vorliegenden Erfindung, die Funktion der Rotorpositionssensoren zu überprüfen und, bei korrekter Funktion der Sensoren, eine Abweichung der tatsächlichen Rotorposition von der durch die Sensoren angezeigten zu erkennen und einen Korrekturwinkel für die Ansteuerung des Motors zu ermitteln.

Diese Aufgabe wird durch das in Anspruch 1 definierte erfindungsgemäße Verfahren gelöst.

Es wird also ein Verfahren bereitgestellt, bei dem die Position des Rotors einer elektronisch kommutierten Synchronmaschine relativ zu einem oder mehreren, insbesondere drei statorfesten, Rotorpositionssensoren ermittelt wird, wobei nach einer ersten Rotorpositionsermittlung der lastlose Rotor durch Anlegen eines geeigneten Spannungsvektors um einen vorgegebenen Winkel gedreht wird, woraufhin eine erneute Rotorpositionsermittlung durchgeführt wird und das Ergebnis der zweiten Rotorpositionsermittlung mit einer erwarteten Rotorposition verglichen wird. Nach der ersten Positionsemittlung kann bei Drehung um einen festen Winkel, wie z.B. 60° elektrisch, eine erwartete Rotorposition ermittelt werden. Wenn erwartete und gemessene zweite Rotorposition übereinstimmen, so liegt der Positionsfehler unterhalb der durch Anzahl und Lage der Rotorpositionssensoren bestimmten Winkelauflösung des Rotorlagengebersystems.

Bevorzugt ist ein erstes Kommutierungsschema vorgegeben, wobei ein Zusammenhang zwischen angelegtem Spannungsvektor und erwarteter Rotorposition hergestellt wird. Wenn ein Kommutierungsschema vorgegeben ist, kann die erwartete Rotorposition durch einfaches Auslesen der Kommutierungstabelle ermittelt werden.

Es ist vorteilhaft, wenn die Zuordnung zwischen aktueller Rotorposition und zur Erzielung einer gewünschten Drehung anzulegendem Spannungsvektor anhand eines vorgegebenen ersten Kommutierungsschemas erfolgt. Bei vorgegebenem Kommutierungsschema kann im Rahmen der durch Anordnung und Anzahl der Sensoren gegebenen Genauigkeit eine Drehung um einen bestimmten Winkel hervorgerufen werden, indem ein eine winkelabhängige Anzahl von Spalten in der Kommutierungstabelle entfernter Spannungsvektor angelegt wird.

Vorzugsweise werden nach Maßgabe des Vergleichs zwischen dem Ergebnis der zweiten Rotorpositionsermittlung und der erwarteten Rotorposition alle später ermittelten Rotorpositionen und abgeleitete Größen, wie z.B. die momentane Drehzahl, korrigiert. Wird ein einmal ermittelter Versatz in der Rotorposition bei der späteren Kommutierung des Motors anhand der Rotorpositionssensoren berücksichtigt, so wird immer das größtmögliche mechanische Drehmoment abgegeben.

Zweckmäßigerweise werden während der Rotorpositionsermittlung die Ströme durch die Phasenwicklungen in Abhängigkeit von Temperaturinformationen begrenzt. Insbesondere wird bei Vorliegen einer höheren Temperatur ein höherer Begrenzungsstrom gewählt und bei Vorliegen einer niedrigeren Temperatur ein niedrigerer Begrenzungsstrom gewählt. Die Magnetisierung des permanent erregten Rotors nimmt bei höherer Temperatur ab, was durch entsprechend erhöhte Ströme durch die Statorwicklungen kompensiert werden kann. Man kann die Spulenströme dann immer gerade so hoch wählen, dass das erfindungsgemäße Verfahren durchgeführt werden kann. Die Gefahr einer Beschädigung des Motors oder der angetriebenen Vorrichtung ist wegen des geringen abgegebenen Drehmoments minimal.

Es ist vorteilhaft, wenn während der Rotorpositionsermittlung die Ströme durch die Phasenwicklungen durch ein abwechselndes Ein- und Ausschalten der an den Phasenwicklungen anliegenden Spannungen begrenzt. Dies ermöglicht eine Strombegrenzung auch dann, wenn keine Pulsweitenmodulationsschaltung in der Ansteuerelektronik des Motors vorhanden ist.

In einer besonders bevorzugten Ausführungsform der Erfindung besitzt die elektronisch kommutierte Synchronmaschine einen permanent erregten Rotor und einen mit drei Phasenwicklungen versehenen Stator sowie drei geeignet für ein erstes Kommutierungsschema angeordnete Rotorpositionssensoren, das Ermitteln einer Rotorposition erfolgt durch Auslesen der Positionssensordaten, der geeignete Spannungsvektor wird anhand eines zweiten Kommutierungsschemas bestimmt und die zweite ermittelte Rotorposition wird mit dem ersten Kommutierungsschema verglichen. Bei korrekter Funktion der Rotorpositionssensoren ist dann die Position des Rotors mit einer dem Abstand zwischen zwei Spalten der Kommutierungstabelle entsprechenden Genauigkeit bekannt.

In einer ganz besonders bevorzugten Ausführungsform der Erfindung werden Rotorpositionen als Winkel angegeben, wobei 360° einem kompletten Durchlaufen eines Kommutierungsschemas entsprechen, und nach dem Vergleich zwischen zweiter ermittelter Rotorposition und erstem Kommutierungsschema ein 90° entfernter Spannungsvektor des ersten Kommutierungsschemas angelegt wird, woraufhin ein weiter 90° in derselben Richtung entfernter Spannungsvektor des zweiten Kommutierungsschemas angelegt wird und anschließend eine dritte Rotorposition ermittelt wird, wobei auf einen Fehler erkannt wird, wenn die Daten der Positionssensoren für die dritte Rotorposition gegenüber denen der zweiten Rotorposition nicht invertiert sind. Sind die Daten invertiert, so ist die korrekte Funktion aller Rotorpositionssensoren sichergestellt.

Gemäß einer alternativen ganz besonders bevorzugten Ausführungsform der Erfindung wird anschließend mindestens ein weiterer, in entgegengesetzter Drehrichtung benachbarter Spannungsvektors des zweiten Kommutierungsschemas angelegt und anschließend eine dritte Rotorposition ermittelt, wobei auf einen Fehler erkannt wird, wenn die Daten der Positionssensoren für die dritte Rotorposition sich nicht von denen der zweiten Rotorposition unterscheiden.

Besonders bevorzugt besitzt die elektronisch kommutierte Synchronmaschine einen permanent erregten Rotor und einen mit drei Phasenwicklungen versehenen Stator sowie drei geeignet für ein Kommutierungsschema angeordnete Rotorpositionssensoren, wobei vor dem ersten Ermitteln einer Rotorposition ein Basisspannungsvektor des Kommutierungsschemas angelegt wird, das Ermitteln der Rotorposition durch Auslesen der Positionssensordaten erfolgt, der geeignete Spannungsvektor gegenüber dem Basisspannungsvektor in definierten Schritten geändert wird und die zweite Ermittlung der Rotorposition sowie die Änderung des geeigneten Spannungsvektors fortlaufend erfolgen, bis eine benachbarte Rotorposition angezeigt wird. Dieses Vorgehen ermöglicht eine genauere Bestimmung der Rotorposition bzw. des Umschaltpunktes der Rotorpositionssensoren.

Ganz besonders bevorzugt basieren die Rotorpositionssensoren auf dem Hall-Effekt; die schrittweise Änderung des Spannungsvektors und das Auslesen der Positionssensordaten erfolgen wiederholt, wobei die durch Anlegen des Basisspannungsvektors erreichte Rotorposition aus beiden Laufrichtungen des Motors angefahren wird, die zum Zeitpunkt einer Änderung der Positionssensordaten aktuellen Spannungsvektoren mit dem Basisspannungsvektor verglichen werden und daraus ein Maß für die Hysterese des auf dem Hall-Effekt basierenden Positionssensors berechnet wird, dessen Daten sich geändert haben.

Insbesondere wird die Hysterese aller auf dem Hall-Effekt basierenden Positionssensoren durch Anlegen eines zum jeweiligen Umschaltpunkt benachbarten Basisspannungsvektors und wiederholte schrittweise Änderung des Spannungsvektors unter gleichzeitigem Auslesen des betroffenen Positionssensors ausgemessen.

Ganz besonders bevorzugt werden die gegenüber dem Basisspannungsvektor geänderten Umschaltpositionen des oder der betrachteten Rotorpositionssensoren bei der nachfolgenden Ansteuerung der elektronisch kommutierten Synchronmaschine durch geeignete Korrekturwerte berücksichtigt, wobei insbesondere für jeden betrachteten Rotorpositionssen sor eine Positionsdifferenz und/oder eine Hysterese gespeichert und berücksichtigt wird.

Ganz besonders bevorzugt werden die geeigneten Spannungsvektoren unter Verwendung bekannter Vektormodulationsverfahren eingestellt, wobei insbesondere Totzeiteffekte durch geeignete Änderung des jeweiligen Tastverhältnisses kompensiert werden. Totzeiteffekte werden durch die zur Vermeidung eines Kurzschlusses nötige Zeitverzögerung beim Schalten einer Gleichrichterbrücke verursacht. Indem das Tastverhältnis, d.h. das Verhältnis von Pulsbreite zu Pulsperiode angepasst wird, lässt sich die Ausgabe eines Spannungsvektors mit fehlerbehaftetem Winkel vermeiden.

Gemäß einer alternativen ganz besonders bevorzugten Ausführungsform der Erfindung werden die geeigneten Spannungsvektoren durch Änderung einer der angelegten Spannungen mittels des Tastverhältnisses variiert.

In einer weiteren ganz besonders bevorzugten Ausführungsform der Erfindung werden die geeigneten Spannungsvektoren durch schnelles Umschalten zwischen benachbarten Basisspannungsvektoren erzeugt.

Es ist ganz besonders zweckmäßig, wenn eine Strombegrenzung durch wiederholtes kurzzeitiges Einfügen von Nullvektoren erfolgt. Bei Nullvektoren werden alle Wicklungen mit dem gleichen Potential beaufschlagt, so dass sich keine Spannungsdifferenz ausbildet.

Die Erfindung betrifft auch eine Schaltungsanordnung zum Ansteuern einer elektronisch kommutierten Synchronmaschine, welche ein Verfahren durchführt, bei dem die Position des Rotors einer elektronisch kommutierten Synchronmaschine relativ zu einem oder mehreren, insbesondere drei statorfesten, Rotorpositionssensoren ermittelt wird, und insbesondere Bestandteil einer Schaltungsanordnung zur Steuerung oder Regelung der Bremsen eines Kraftfahrzeugs ist.

Zweckmäßigerweise erfolgt ein Betrieb des Motors unter Last erst nach fehlerfreier Durchführung eines Verfahrens, bei dem die Position des Rotors einer elektronisch kommutierten Synchronmaschine relativ zu einem oder mehreren Rotorpositionssensoren ermittelt wird, wobei insbesondere die Ansteuerung eine erkannte Differenz zwischen Ist- und Sollposition des Rotors berücksichtigt.

Die Erfindung betrifft weiterhin die Verwendung einer solchen Schaltungsanordnung in Kraftfahrzeugen.

Vorzugsweise werden die Ströme durch die Statorwicklungen begrenzt, insbesondere um eine Beschädigung des Motors oder der angetriebenen Vorrichtung zu verhindern.

Besonders bevorzugt erfolgt die Strombegrenzung durch eine Begrenzung der anliegenden Spannung, insbesondere durch eine Pulsweitenmodulation in der Ansteuerschaltung.

In einer weiteren besonders bevorzugten Ausführungsform der Erfindung wird bei Überschreiten eines Schwellwerts für die Temperatur ein Stromfluss nahezu vollständig unterbunden.

Weitere bevorzugte Ausführungsformen ergeben sich aus den Unteransprüchen und der nachfolgenden Beschreibung eines Ausführungsbeispiels an Hand von Figuren.

Es zeigen

Fig. 1   eine schematische Übersicht einer elektronisch kommutierten Synchronmaschine,

Fig. 2   eine beispielhafte Anordnung der Hall-Sensoren und des Encoderrads, und

Fig. 3   eine Lage der Magnetfeldvektoren bei Anlegen eines Basisspannungsvektors der 120°- und der 180°-Blockkommutierung.

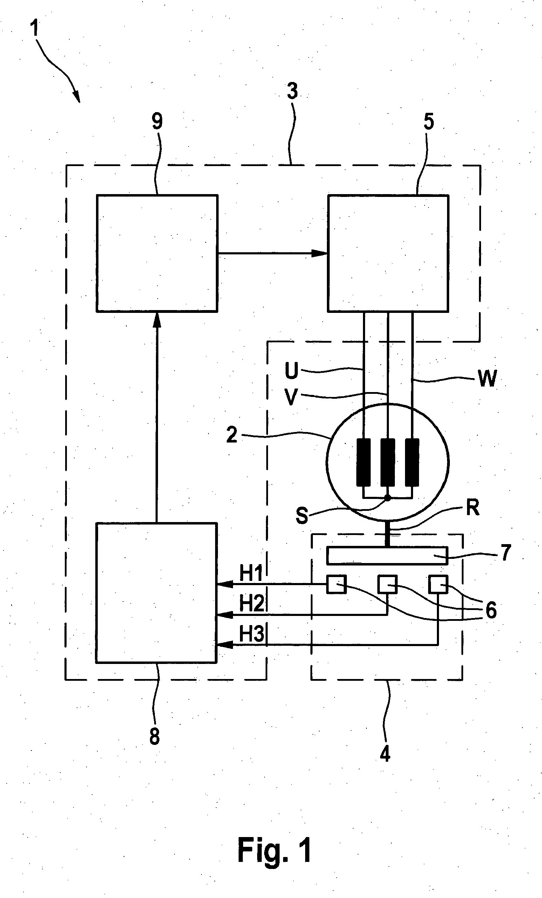

Wie in Fig. 1 dargestellt, umfasst eine elektronisch kommutierte Synchronmaschine 1 einen elektromechanischen Energiewandler 2, eine elektronische Steuereinrichtung 3 und ein Rotorlagengebersystem 4. Neben der Nutzung als Antrieb ist auch eine Verwendung als Generator möglich, wobei folglich mechanische Bewegung in elektrische Energie gewandelt wird. Der Stator besteht typischerweise aus 3 Phasenwicklungen, die mit U, V und W bezeichnet werden und sich in einem Sternpunkt S treffen. Prinzipiell wäre auch eine Dreieckschaltung der Phasenwicklungen möglich. Der permanent erregte Rotor ist über eine gelagerte Rotorwelle R mit einem magnetischen Encoderrad 7 verbunden. Das Magnetfeld des Encoderrads wird von digitalen Hallsensoren 6 abgetastet. Diese schalten z.B. durch, wenn sie sich im Feld eines magnetischen Nordpols befinden, und leiten keinen Strom, wenn ein magnetischer Südpol direkt benachbart ist. Solche Hallschalter besitzen eine Hysterese, weshalb das Umschalten erst ab einem gewissen Mindest-Magnetfeld erfolgt. Die Informationen H1, H2, H3 der typischerweise 3 Hallsensoren werden von einer Schaltung zur Ermittlung der Rotorlage (8) verarbeitet. Anhand des elektrischen Winkels, welcher als Rotorlage ermittelt wurde, bestimmt eine Ansteuerschaltung (9) den an die Stränge U, V, W des Stators anzulegenden Spannungsvektor und steuert die Halbleiterschalter der Wechselrichterbrücke (5) entsprechend an. Die elektronische Steuereinrichtung kann auch ganz oder teilweise als von einem Mikrocontroller ausgeführtes Programm implementiert sein.

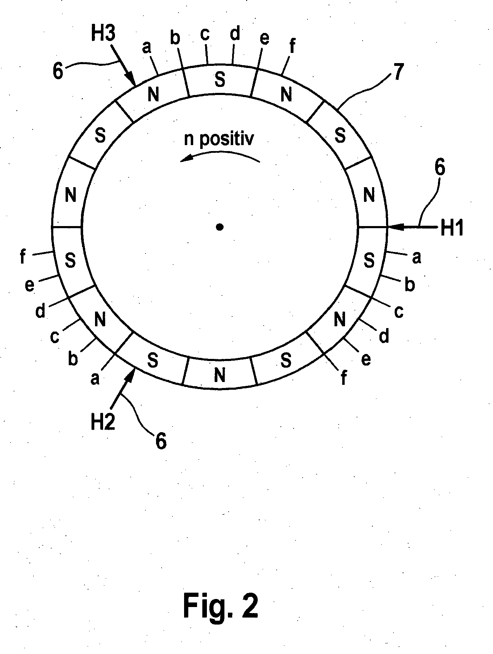

Die Geometrie von Encoderrad und Hallsensoren ist in Fig. 2 gezeigt, bei der die Drehachse aus der Papierebene herausragt. Die drei statorfesten Sensoren sind so montiert, dass bei einer Rotordrehung im Abstand von je 60° elektrischen Winkels je ein Sensor seinen Ausgangszustand wechselt. Der Zusammenhang zwischen elektrischem und mechanischem Winkel kann gemäß der folgenden Formel bestimmt werden:

$$\varphi_{el} = \varphi_{mech} \cdot p$$

Hier bezeichnet $\varphi_{el}$ den elektrischen Winkel, $\varphi_{mech}$ den mechanischen Winkel und $p$ die Polpaarzahl. Für einen geeignet gelagerten Stabmagneten als Rotor wären also elektrischer und magnetischer Winkel gleich, bei dem gezeigten Fall von $p = 7$ sind die mechanischen Winkel deutlich kleiner als die elektrischen Winkel. Sinnvolle Anordnungen der 3 Hallsensoren ergeben sich bei elektrischen Winkeldifferenzen $\Delta\varphi_{Sensor\_el}$ zwischen den Sensoren von

$$\Delta\varphi_{Sensor\_el} = 120° + n \cdot 360°,$$

wobei n eine ganze Zahl darstellt; diese gibt an, wie häufig das verwendete Kommutierungsschema durchlaufen werden muss, um den Rotor von der Position des ersten betrachteten Sensors zum nächsten zu bewegen.

Dreht sich der Rotor gegen den Uhrzeigersinn und stehen die Sensoren wie eingezeichnet, so werden die eingezeichneten Relativlagen von a nach f durchlaufen; die Hallsensoren geben die in der Tabelle angezeigten Signale aus (N:Nordpol vor Sensor, S: Südpol vor Sensor):

| Position | a | b | C | d | e | f |
|---|---|---|---|---|---|---|
| H1 | S | S | S | N | N | N |
| H2 | S | N | N | N | S | S |
| H3 | N | N | S | S | S | N |

Die Position f entspricht dabei der Anfangsposition, d.h. die Sensorsignale und das Kommutierungsschema wiederholen sich nach 360° elektrischem Winkel, was dem mechanischen Winkel eines Polpaars entspricht. Man erhält durch die 3 Hallsensoren also absolute elektrische Winkel, die auf 60° genau sind.

Welche Spannungen angelegt werden müssen, um eine bestimmte Ausrichtung des Magnetfelvektors zu erreichen, kann anhand eines Kommutierungsschemas bestimmt werden. Eine bestimmte Kombination aus an die Phasenwicklungen anzulegenden Spannungen wird als Spannungsvektor bezeichnet, bzw. als Basisspannungsvektor, wenn die Spannungen genau denen gemäß eines Blockkommutierungsschemas anzulegenden entsprechen, bei denen nur bestimmte diskrete Spannungswerte vorkommen.

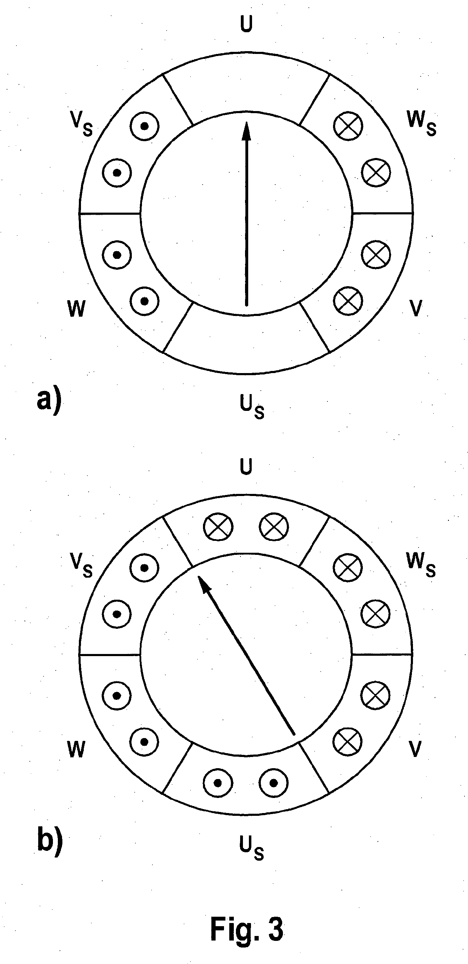

In Fig. 3 ist ein schematischer Schnitt durch den Motor senkrecht zur Drehachse gezeigt, wobei die drei Phasenwicklungen an den Punkten U, V, und W an die Wechselrichterbrücke angeschlossen sind, und die zweiten Enden jeder Wicklung Us, Vs und Ws sternförmig verbunden sind. In die Papierebene fließender Strom ist mit einem Kreuz angedeutet, aus der Papierebene fließender Strom mit einem Punkt; der Magnetfeldvektor ist durch einen Pfeil dargestellt. Ein übliches Kommutierungsschema stellt die 120°-Blockkommutierung dar, bei der eine Phase mit positiver (+) und eine mit negativer (-) Versorgungsspannung beaufschlagt ist, während die dritte entweder nicht angeschlossen ist oder auf einem mittleren Potential liegt (0). Die Geometrie bei Anlegen eines beispielhaften Basisspannungsvektors der 120°-Blockkommutierung ist Fig. 3 (a) gezeigt; nach kurzer Zeit würde sich ein lastloser Rotor entlang des Magnetfeldvektors ausrichten. Wenn die Hallsensoren wie in Fig. 2 ausgerichtet sind, zeigen sie dann Position f an; eine geringfügige weitere Drehung gegen den Uhrzeigersinn verursacht ein Umschalten des ersten Hallsensors, also eine Änderung des Signals H1. Dieses Umschalten des Hallsensors signalisiert der Ansteuerelektronik, dass zwischen dem 60° und dem 120° elektrischen Winkels benachbarten Basisspannungsvektor umgeschaltet werden muss, um eine Drehung gegen den Uhrzeigersinn mit einem hohen abgegebenen Drehmoment zu gewährleisten.

Die den verschiedenen Positionen bzw. elektrischen Winkeln entsprechenden Basisspannungsvektoren lassen sich der folgenden Kommutierungstabelle entnehmen:

| Position | a | b | c | d | e | f |
|---|---|---|---|---|---|---|
| U_120 | + | + | 0 | - | - | 0 |
| V_120 | 0 | - | - | 0 | + | + |
| W_120 | - | 0 | + | + | 0 | - |
| U_180 | + | + | - | - | - | + |
| V_180 | - | - | - | + | + | + |
| W_180 | - | + | + | + | - | - |

U_120, V_120 und W_120 bezeichnen dabei jeweils die an die Phasen U, V und W anzulegenden Spannungen für eine 120°-Blockkommutierung. Auch in der Tabelle angegeben sind jeweils die um 30° elektrischen Winkels entgegengesetzt dem Uhrzeigersinn benachbarten Basisspannungsvektoren der 180°-Blockkommutierung; für Position f ist die entsprechende Geometrie in Fig. 3 (b) dargestellt. Der lastlöse Rotor richtet sich entlang des um 30° elektrischen Winkel benachbarten Magnetfeldvektors aus und befindet sich somit genau zwischen zwei Kommutierungspositionen der 120°-Blockkommutierung. Für eine 180°-Blockkommutierung müssten die Hallsensoren also um 30° elektrischen Winkels verdreht sein.

Es gibt also zwei gebräuchliche Blockkommutierungsschemata, bei denen jeweils zwei (120°-Blockkommutierung) oder drei (180°-Blockkommutierung) Phasenwicklungen bestromt werden, und drei Hallsensoren zur Ermittlung der Rotorposition verwendet werden, wobei die Sensoren zwischen den beiden Schemata um 30° elektrischen Winkels verdreht sind. Sind die Sensoren für eine 120°-Blockkommutierung angeordnet, liegen die Magnetpole nach Anlegen eines 180°-Basisspannungsvektors genau mittig vor den Sensoren, weshalb die Pegel der Hall-sensoren demnach eindeutig der Kommutierungstabelle zuzuordnen sein müssen. Entsprechend führt bei Anordnung der Sensoren für 180°-Blockkommutierung das Anlegen eines 120°-Basisspannungsvektors zu einem eindeutig zuordnungsfähigen Signal der Sensoren.

Bei Sensoranordnung gemäß einem der beiden Blockkommutierungsschemata führt also das Anlegen eines Basisspannungsvektors des anderen Blockkommutierungsschemas zu eindeutigen Sensorsignalen. Der aktuelle Winkelfehler liegt dann unter 30° elektrischen Winkels, was bei 7 Polpaaren einem mechanischen Winkel von etwa 4,3° entspricht. Eine Toleranz in der Magnetisierung des Encoderrads wird hierbei vernachlässigt; diese ist meist auch betragsmäßig deutlich kleiner.

Wenn sich bei einem elektronisch kommutierten Motor die Relativlage zwischen Stator und Sensorelementen verstellt oder das Encoderrad gegenüber dem Rotor verrutscht, resultiert dies in einem Fehler der aus Sensordaten ermittelten Rotorlage. Würde der Motor anhand einer um $\Delta\varphi_{error}$ elektrischen Winkels verschobenen Rotorlage kommutiert, so führte dies zu verschiedenen Arten von Fehlverhalten:

Für $0 \leq \Delta\varphi_{error} \leq 60°$ würde der Motor in einer Drehrichtung zu früh und in der anderen zu spät kommutieren, wodurch sich die Motorkennlinie, bzw. das bei der jeweiligen Drehzahl abgegebene mechanische Drehmoment, je nach Laufrichtung unterscheidet. Bei Motoren ohne Reluktanzmoment verringert sich in beide Richtungen das maximale Stillstandsmoment, also das bei stillstehendem Rotor maximal abgegebene Drehmoment.

Für $\Delta\varphi_{error} \approx 90°$ würde der Magnetfeldvektor nahezu parallel oder antiparallel zum Rotor stehen, das abgegebene Stillstandsmoment ist nahe Null und die Momentenrichtung ist nicht mehr eindeutig.

Für $\Delta\varphi_{error} > 120°$ würde die Momentenrichtung umgedreht, d.h. der Motor dreht entgegen der gewünschten Richtung. Ein überlagerter Drehzahlregler würde seine Stellgröße immer weiter erhöhen, bis eine obere Grenze erreicht ist.

Um schwerwiegendes Fehlverhalten und insbesondere eine Beschädigung des Motors oder der angetriebenen Vorrichtung auszuschließen, kann eine Überprüfung des Sensorsystems bei Systemstart notwendig werden. Bei allen Systemen, in denen ein lastloser Motorbetrieb möglich ist, kann das erfindungsgemäße Verfahren angewendet werden.

Ist das Sensorsystem für eine 120°-Blockkommutierung eingestellt, und wird an den lastlosen Rotor ein Basisspannungsvektor der 180°-Blockkommutierung für eine bestimmte Zeit angelegt, so richtet sich der Rotor so aus, dass die Pegel der Hallsensoren eindeutig der Kommutierungstabelle zuzuordnen sein müssen. In diesem Fall sind Sensoren bzw. Encoderrad um weniger als 30° elektrischen Winkels gegenüber ihrer Sollposition verdreht. Im Verlauf dieser Überprüfung hat sich der Rotor um nicht mehr 60° +/- 30° elektrischen Winkels gedreht.

Um die Funktion der Hallsensoren zu testen und insbesondere auszuschließen, dass ein Sensor immer N oder immer S anzeigt, kann man die Daten der Hallsensoren zwischenspeichern und den Rotor um 180° elektrischen Winkels weiterdrehen, indem man zuerst einen 90° entfernten 120°-Basisspannungsvektor und dann einen weitere 90° entfernten 180°-Basisspannungsvektor anlegt. Anschließend müssen die Hallsensoren invertierte Daten zeigen. Ist für einen Sensor also N zwischengespeichert und nach der Drehung wird S ausgemessen, so funktioniert der Hallsensor wie erwartet. Durch Auslesen aller Sensoren kann somit das gesamte Sensorsystem und auch die Lastlosigkeit des Rotors überprüft werden.

Eine Überprüfung der Freigängigkeit des Rotors kann alternativ durch Anlegen mindestens eines 180°-Basisspannungsvektors in einer Drehrichtung des Motors, Zwischenspeichern der Hallsensordaten und Anlegen mindestens eines weiteren 180° Basisspannungsvektor in entgegengesetzter Drehrichtung erfolgen, wobei neu ausgemessene Daten mindestens eines Hallsensors sich von den zwischengespeicherten unterscheiden müssen.

Entsprechend kann ein für 180°-Blockkommutierung eingestelltes Sensorsystem überprüft werden, indem Basisspannungsvektoren des jeweils anderen Kommutierungsschemas verwendet werden.

Um Beschädigungen des Motors während der Überprüfung von Rotor- und Sensorlage zu vermeiden, bietet es sich an, die angelegten Spannungen z.B. durch Pulsweitenmodulation zu begrenzen, wodurch der sich einstellende Strom und somit auch das abgegebene Drehmoment verringert werden. Wenn eine Pulsweitenmodulation der Versorgungsspannung nicht möglich ist, kann die Strombegrenzung durch alternierendes ein- und ausschalten des Spannungsvektors erfolgen. Da das vom Permanentmagneten der Rotors erzeugte Magnetfeld, und also auch die erreichbaren Drehmoment mit höheren Temperaturen abnimmt, kann dies - bei Verfügbarkeit von Temperaturinformationen - durch Erhöhung der Wicklungsströme kompensiert werden. Es bietet sich daher an, die Steuerschaltung mit Mitteln zur Bestimmung einer Temperatur auszustatten, wobei ein spezieller Sensor oder temperaturabhängige Eigenschaften bereits vorhandener elektrischer Bauelemente verwendet werden können.

Die Ansteuerung des Motors bzw. eine Regelung der Ströme kann durch Toleranzen des Sensorsystems erschwert werden, da eine Bestimmung des Rotorwinkels und/oder der Drehzahl entsprechend dem Ausmaß der Toleranzen mit größeren Fehlern behaftet ist. Sie können mit Hilfe einer noch genaueren Überprüfung der Sensorpositionen kompensiert werden; diese kann erfolgen, wenn die an die Wicklungen angelegten Spannungen einzeln angewählt bzw. geändert werden können.

Ist das Sensorsystem für eine 120°-Blockkommutierung eingestellt, und wird an den lastlosen Rotor ein 120°-Basisspannungsvektor für eine bestimmte Zeit angelegt, so liegt direkt vor oder in unmittelbarer Nähe eines Hallsensors ein N/S-Übergang des Encoderrads. Der Rotor befindet sich somit in der Nähe einer Position, in der sich die Daten eines Hallsensors ändern und der angelegte Basisspannungsvektor umgeschaltet werden muss. Variiert man nun den Winkel des Spannungsvektors stufenlos oder in definierten Schritten, so kann die genaue Schaltposition der Hallsensoren ermittelt werden.

Wegen der Hysterese des Hallsensors sowie eventueller Unterschiede in der Magnetfeldstärke einzelner Positionen des Encoderrads ändert sich der Umschaltpunkt je nach angefahrener Position und je nach Richtung der Annäherung. Die Hysterese des sich jeweils ändernden Hallsensors wird bestimmt, indem der angelegte Spannungsvektor so lange schrittweise oder stufenlos in eine Drehrichtung variiert wird, bis ein Umschalten stattfindet oder die Lage des benachbarten Basisspannungsvektors erreicht ist. Anschließend erfolgt eine Annäherung an den Umschaltpunkt des Hallsensors in entgegengesetzter Drehrichtung zur Ermittlung des Differenzwinkels zwischen Spannungsvektor zum Zeitpunkt des Umschaltens und entsprechendem Basisspannungsvektor. Bei Überfahren der Position des Basisspannungsvektors und Annäherung in entgegengesetzter Drehrichtung kann erneut ein Differenzwinkel zwischen Spannungsvektor zum Zeitpunkt des Umschaltens und entsprechendem Basisspannungsvektor ermittelt werden, wodurch man die Hysterese bzw. die Umschaltwinkeldifferenzen des betrachteten Sensors kennt. Über eine Durchführung diese Überprüfung für alle Kommutierungspositionen über alle Polpaare lässt sich das gesamte Sensorsystem vermessen.

Das Vorgehen zur schrittweisen oder stufenlosen Variation des Spannungsvektors kann je nach vorhandenen Schaltungsmitteln variieren. Wenn für alle an die Wicklungen angelegten Spannungen eine eigene Schaltung zur Pulsweitenmodulation bereitsteht, so kann auf bereits bekannte Vektormodulationsverfahren wie die Sinus-Dreieck-Modulation oder die Space-Vektor-Modulation zurückgegriffen werden. Eine Berücksichtigung von Totzeiteffekten kann durch ein Anpassen des Tastverhältnisses erfolgen. Eine Strombegrenzung ist durch Anpassung der Zwischenkreisspannung möglich.

Steht nur eine einzige Pulsweitenmodulationsschaltung zur Verfügung und kann jede Phasenwicklung wahlweise mit positiver oder negativer Versorgungsspannung sowie Ausgangsspannung der Pulsweitenmodulationsschaltung beaufschlagt werden oder offen bleiben, so wird die Ausgangsposition mit einem Basisspannungsvektor angefahren. Von dort ausgehend wird das an einer Phasenwicklung anliegende Potential schrittweise nach oben und unten variiert, bis der Schaltposition des zugehörigen Hallsensors gefunden wurde. Zweckmäßigerweise wird bei für 120°-Blockkommutation eingestellten Sensoren die eigentlich offene Phasenwicklung mit der Mittelspannung beaufschlagt, die einem Tastverhältnis der Pulsweitenmodulation von 50% entspricht, und die anliegende Spannung durch Änderung des Tastverhältnisses variiert. Zur Begrenzung des Stroms können bei aktiv anliegendem Spannungsvektor diesem mehrfach Nullvektoren überlagert werden, bei denen alle Phasenwicklungen mit positiver oder negativer Versorgungsspannung beaufschlagt sind.

Bei ausreichend schneller Ansteuerelektronik kann eine fehlende Pulsweitenmodulationsschaltung durch passendes Umschalten zwischen benachbarten Basisspannungsvektoren ersetzt werden, wobei zur Strombegrenzung auch in diesem Fall Nullvektoren überlagert werden können.

Es bietet sich an, eine Überprüfung des Sensorsystems nach Fertigung einer neuen Antriebseinheit aus elektrisch kommutierter Maschine und angetriebener Vorrichtung durchzuführen. Die ermittelten Korrekturwinkel bzw. die Hysterese der Hallsensoren können dann in einem nichtflüchtigen Speicher gespeichert werden. Bei jedem Systemstart kann die Antriebseinheit ihr Sensorsystem selbstständig ausmessen und mit den gespeicherten Werten vergleichen. Die dadurch verbesserte Qualität interner Messgrößen erlaubt eine genauere Regelung des Antriebs.

**Patentansprüche**

1. Verfahren, bei dem die Position des permanent erregten Rotors einer elektronisch kommutierten Synchronmaschine, welche einen mit drei Phasenwicklungen versehenen Stator besitzt, relativ zu drei statorfesten und geeignet für ein Kommutierungsschema einer ersten Blockkommutierung angeordneten Rotorpositionssensoren ermittelt wird, wobei das Ermitteln der Rotorposition durch Auslesen der Positionssensordaten erfolgt, **dadurch gekennzeichnet, dass**

- nach einer ersten Rotorpositionsermittlung der lastlose Rotor durch Anlegen eines geeigneten Spannungsvektors, welcher anhand eines Kommutierungsschemas einer zweiten Blockkommutierung bestimmt wird, um einen vorgegebenen Winkel gedreht wird,

- woraufhin eine erneute Rotorpositionsermittlung durchgeführt wird und das Ergebnis der zweiten Rotorpositionsermittlung mit einer in Folge des Anlegens des geeigneten Spannungsvektors erwarteten Rotorposition verglichen wird,

- wobei der geeignete Spannungsvektor anhand einer Zuordnung zwischen der ersten Rotorposition und zur Erzielung einer gewünschten Drehung anzulegendem Spannungsvektor ermittelt wird,

- und die zweite ermittelte Rotorposition zur Verbesserung der Genauigkeit der Positionserkennung des Rotors mit der ersten ermittelten Rotorposition verglichen wird.

2. Verfahren nach Anspruch 1, **dadurch gekennzeichnet, dass** ein erstes Kommutierungsschema vorgegeben ist, wobei ein Zusammenhang zwischen angelegtem Spannungsvektor und erwarteter Rotorposition hergestellt wird.

3. Verfahren nach mindestens einem der Ansprüche 1 oder 2, **dadurch gekennzeichnet, dass** nach Maßgabe des Vergleichs zwischen dem Ergebnis der zweiten Rotorpositionsermittlung und der erwarteten Rotorposition alle später ermittelten Rotorpositionen und abgeleitete Größen korrigiert werden.

4. Verfahren nach mindestens einem der Ansprüche 1 bis 3, **dadurch gekennzeichnet, dass** während der Rotorpositionsermittlung die Ströme durch die Phasenwicklungen in Abhängigkeit von Temperaturinformationen begrenzt werden, insbesondere dass bei Vorliegen einer höheren Temperatur ein höherer Begrenzungsstrom gewählt wird und bei Vorliegen einer niedrigeren Temperatur ein niedrigerer Begrenzungsstrom gewählt wird.

5. Verfahren nach mindestens einem der Ansprüche 1 bis 4, **dadurch gekennzeichnet, dass** während der Rotorpositionsermittlung die Ströme durch die Phasenwicklungen durch ein abwechselndes Ein- und Ausschalten der an den Phasenwicklungen anliegenden Spannungen begrenzt werden.

6. Verfahren nach einem der vorhergehenden Ansprüche, **dadurch gekennzeichnet, dass** Rotorpositionen als Winkel angegeben werden, wobei 360° einem kompletten Durchlaufen eines Kommutierungsschemas entsprechen, und nach dem Vergleich zwischen zweiter ermittelter Rotorposition und erstem Kommutierungsschema ein 90° entfernter Spannungsvektor des ersten Kommutierungsschemas angelegt wird, woraufhin ein weiter 90° in der selben Richtung entfernter Spannungsvektor des zweiten Kommutierungsschemas angelegt wird und anschließend eine dritte Rotorposition ermittelt wird, wobei auf einen Fehler erkannt wird, wenn die Daten der Positionssensoren für die dritte Rotorposition gegenüber denen der zweiten Rotorposition nicht invertiert sind.

7. Verfahren nach einem der vorhergehenden Ansprüche, **dadurch gekennzeichnet, dass** anschließend mindestens ein weiterer, in entgegengesetzter Drehrichtung benachbarter Spannungsvektors des zweiten Kommutierungsschemas angelegt wird und anschließend eine dritte Rotorposition ermittelt wird, wobei auf einen Fehler erkannt wird, wenn die Daten der Positionssensoren für die dritte Rotorposition sich nicht von denen der zweiten Rotorposition unterscheiden.

8. Verfahren nach mindestens einem der Ansprüche 2 bis 6, **dadurch gekennzeichnet, dass** die elektronisch kommutierte Synchronmaschine einen permanent erregten Rotor und einen mit drei Phasenwicklungen versehenen Stator sowie drei geeignet für ein Kommutierungsschema angeordnete Rotorpositionssensoren besitzt, wobei vor dem ersten Ermitteln einer Rotorposition ein Basisspannungsvektor des Kommutierungsschemas angelegt wird, das Ermitteln der Rotorposition durch Auslesen der Positionssensordaten erfolgt, der geeignete Spannungsvektor gegenüber dem Basisspannungsvektor in definierten Schritten geändert wird und die zweite Ermittlung der Rotorposition sowie die Änderung des geeigneten Spannungsvektors fortlaufend erfolgen, bis eine benachbarte Rotorposition angezeigt wird.

9. Verfahren nach Anspruch 8, **dadurch gekennzeichnet, dass** die Rotorpositionssensoren auf dem Hall-Effekt basieren, die schrittweise Änderung des Spannungsvektors und das Auslesen der Positionssensordaten wiederholt erfolgen, wobei die durch Anlegen des Basisspannungsvektors erreichte Rotorposition aus beiden Laufrichtungen des Motors angefahren wird und die zum Zeitpunkt einer Änderung der Positionssensordaten aktuellen Spannungsvektoren mit dem Basisspannungsvektor verglichen werden und daraus ein Maß für die Hysterese des auf dem Hall-Effekt basierenden Positionssensors berechnet wird, dessen Daten sich geändert haben.

10. Verfahren nach Anspruch 9, **dadurch gekennzeichnet, dass** die Hysterese aller auf dem Hall-Effekt basierenden Positionssensoren durch Anlegen eines zum jeweiligen Umschaltpunkt benachbarten Basisspannungsvektors und wiederholte schrittweise Änderung des Spannungsvektors unter gleichzeitigem Auslesen des betroffenen Positionssensors ausgemessen wird.

**11.** Verfahren nach mindestens einem der Ansprüche 8 bis 10, **dadurch gekennzeichnet, dass** die gegenüber dem Basisspannungsvektor geänderten Umschaltpositionen des oder der betrachteten Rotorpositionssensoren bei der nachfolgenden Ansteuerung der elektronisch kommutierten Synchronmaschine durch geeignete Korrekturwerte berücksichtigt werden, wobei insbesondere für jeden betrachteten Rotorpositionssensor eine Positionsdifferenz und/oder eine Hysterese gespeichert und berücksichtigt wird.

**12.** Verfahren nach mindestens einem der Ansprüche 8 bis 11, **dadurch gekennzeichnet, dass** die geeigneten Spannungsvektoren unter Verwendung bekannter Vektormodulationsverfahren eingestellt werden, wobei insbesondere Totzeiteffekte durch geeignete Änderung des jeweiligen Tastverhältnisses kompensiert werden.

**13.** Verfahren nach mindestens einem der Ansprüche 8 bis 11, **dadurch gekennzeichnet, dass** die geeigneten Spannungsvektoren durch Änderung einer der angelegten Spannungen mittels des Tastverhältnisses variiert werden.

**14.** Verfahren nach mindestens einem der Ansprüche 8 bis 11, **dadurch gekennzeichnet, dass** die geeigneten Spannungsvektoren durch schnelles Umschalten zwischen benachbarten Basisspannungsvektoren erzeugt werden.

**15.** Verfahren nach mindestens einem der Ansprüche 8 bis 14, **dadurch gekennzeichnet, dass** eine Strombegrenzung durch wiederholtes kurzzeitiges Einfügen von Nullvektoren erfolgt.

**16.** Schaltungsanordnung zum Ansteuern einer elektronisch kommutierten Synchronmaschine, wobei diese ausgestaltet ist, die Position des permanent erregten Rotors der elektronisch kommutierten Synchronmaschine, welche einen mit drei Phasenwicklungen versehenen Stator besitzt, relativ zu drei statorfesten und geeignet für ein Kommutierungsschema einer ersten Blockkommutierung angeordneten Rotorpositionssensoren zu ermitteln, wobei das Ermitteln der Rotorposition durch Auslesen der Positionssensordaten erfolgt, **dadurch gekennzeichnet, dass** die Schaltungsanordnung weiterhin derart ausgestaltet ist, dass

    - nach einer ersten Rotorpositionsermittlung der lastlose Rotor durch Anlegen eines geeigneten Spannungsvektors, welcher anhand eines Kommutierungsschemas einer zweiten Blockkommutierung bestimmt wird, um einen vorgegebenen Winkel gedreht wird,

    - woraufhin eine erneute Rotorpositionsermittlung durchgeführt wird und das Ergebnis der zweiten Rotorpositionsermittlung mit einer in Folge des Anlegens des geeigneten Spannungsvektors erwarteten Rotorposition verglichen wird,

    - wobei der geeignete Spannungsvektor anhand einer Zuordnung zwischen der ersten Rotorposition und zur Erzielung einer gewünschten Drehung anzulegendem Spannungsvektor ermittelt wird,

    - und die zweite ermittelte Rotorposition zur Verbesserung der Genauigkeit der Positionserkennung des Rotors mit der ersten ermittelten Rotorposition verglichen wird.

**17.** Schaltungsanordnung nach Anspruch 16, **dadurch gekennzeichnet, dass** diese Bestandteil einer Schaltungsanordnung zur Steuerung oder Regelung der Bremsen eines Kraftfahrzeugs ist.

**18.** Schaltungsanordnung nach Anspruch 16 oder 17, **dadurch gekennzeichnet, dass** ein Betrieb des Motors unter Last erst nach fehlerfreier Durchführung eines Verfahrens nach einem der Ansprüche 1 bis 15 erfolgt, wobei insbesondere die Ansteuerung eine erkannte Differenz zwischen Ist- und Sollposition des Rotors berücksichtigt.

**19.** Verwendung einer Schaltungsanordnung nach einem der Ansprüche 16 bis 18 in einem Kraftfahrzeug.

**Claims**

**1.** Method for the determination of the position of the permanently excited rotor of an electronically-commutated synchronous machine, which is provided with a stator which is provided with three phase windings, relative to three rotor position sensors which are fixed to the stator and are in an appropriate arrangement for a commutation scheme of a first block commutation, wherein the rotor position is determined by the read-out of data from the position sensors, **characterized in that**

    - after a first rotor position determination process, the off-load rotor is rotated through a predefined angle by the application of an appropriate voltage vector which is defined by a commutation scheme of a second block commutation,
    - whereafter a further rotor position determination process is carried out, and the result of the second rotor position determination process is compared with a rotor position anticipated as a result of the application of the appropriate voltage vector,

- wherein the appropriate voltage vector is determined by means of an association between the first rotor position and the voltage vector to be applied for the achievement of a desired rotation,

- and the second rotor position thus determined is compared with the first rotor position thus determined in order to improve the accuracy of the position identification of the rotor.

2. Method according to Claim 1, **characterized in that** a first commutation scheme is specified, whereby an association between the voltage vector applied and the anticipated rotor position is established.

3. Method according to at least one of Claims 1 and 2, **characterized in that**, by reference to the comparison between the result of the second rotor position determination process and the anticipated rotor position, all subsequently determined rotor positions and derived variables are corrected.

4. Method according to at least one of Claims 1 - 3, **characterized in that**, during the determination of the rotor position, the currents flowing in the phase windings are subject to limitation on the basis of temperature information whereby, specifically, in case of a higher temperature, a higher limiting current is selected and, in case of a lower temperature, a lower limiting current is selected.

5. Method according to at least one of Claims 1 - 4, **characterized in that**, during the determination of the rotor position, the currents flowing in the phase windings are limited by the alternating cut-in and cut-out of the voltages applied to the phase windings.

6. Method according to one of the preceding claims, **characterized in that** rotor positions are expressed as angles, wherein 360° represents one complete cycle of a commutation scheme and, after the comparison of the second determined rotor position with the first commutation scheme, a voltage vector with an angular displacement of 90° in the first commutation scheme is applied, whereafter a voltage vector in the second commutation scheme at an angle displaced by a further 90° in the same direction is applied, and a third rotor position is determined thereafter, whereby an error is detected if the data from the position sensors for the third rotor position are not inverted in relation to the data for the second rotor position.

7. Method according to one of the preceding claims, **characterized in that** at least one further voltage vector, in adjoining the opposite direction of rotation, of the second commutation scheme is applied thereafter, and a third rotor position is determined thereafter, whereby an error is detected if the data from the position sensors for the third rotor position do not differ from the data for the second rotor position.

8. Method according to at least one of Claims 2 - 6, **characterized in that** the electronically-commutated synchronous machine is provided with a permanently-excited rotor and a stator which is provided with three phase windings, together with three rotor position sensors in an appropriate arrangement for a commutation scheme wherein, prior to the initial determination of a rotor position, a base voltage vector for the commutation scheme is applied, the rotor position is determined by the read-out of data from the position sensors, the appropriate voltage vector is varied in relation to the base voltage vector by specific increments, and the second determination of the rotor position, together with the adjustment of the appropriate voltage vector, are continued progressively until an adjoining rotor position is indicated.

9. Method according to Claim 8, **characterized in that** the rotor position sensors operate on the basis of the Hall effect, and the incremental variation of the voltage vector and the read-out of data from the position sensors are repeated, whereby the desired rotor position is achieved, in both running directions of the motor, by the application of the base voltage vector, and the existing voltage vectors at the time of a change to the data from the position sensors are compared with the base voltage vector, and a resulting measure is calculated for the hysteresis of the position sensor operating by the Hall effect, the data read-outs for which have changed.

10. Method according to Claim 9, **characterized in that** the hysteresis of all position sensors operating by the Hall effect is determined by the application of a base voltage vector which is adjacent to the relevant switchover point, and the repeated incremental variation of the voltage vector with a simultaneous read-out from the position sensor concerned.

11. Method according to at least one of Claims 8 - 10, **characterized in that** the switchover positions of the rotor position sensor(s) concerned, which are adjusted in relation to the base voltage vector, are considered by the application of appropriate adjustments to the subsequent control of the electronically-commutated synchronous machine whereby, specifically, a positional difference and/or hysteresis is logged and taken into consideration for each rotor position sensor in question.

**12.** Method according to at least one of Claims 8 - 11, **characterized in that** the appropriate voltage vectors are set by the use of known vector modulation methods, whereby dead-time effects in particular are compensated by the appropriate adjustment of the relevant pulse duty factor.

**13.** Method according to at least one of Claims 8 - 11, **characterized in that** the appropriate voltage vectors are varied by the adjustment of one of the voltages applied by means of the pulse duty factor.

**14.** Method according to at least one of Claims 8 - 11, **characterized in that** the appropriate voltage vectors are generated by means of rapid switchover between adjacent base voltage vectors.

**15.** Method according to at least one of Claims 8 - 14, **characterized in that** the limitation of current is effected by the repeated and short-term input of zero vectors.

**16.** Circuit arrangement for the control of an electronically-commutated synchronous machine, whereby said circuit arrangement is configured to determine the position of the permanently-excited rotor of the electronically-commutated synchronous machine, which is provided with a stator which is provided with three phase windings, relative to three rotor position sensors which are fixed to the stator and are in an appropriate arrangement for a commutation scheme of a first block commutation, wherein the rotor position is determined by the read-out of data from the position sensors, **characterized in that** the circuit arrangement is furthermore configured such that

- after a first rotor position determination process, the off-load rotor is rotated through a predefined angle by the application of an appropriate voltage vector which is defined by a commutation scheme of a second block commutation,
- whereafter a further rotor position determination process is carried out, and the result of the second rotor position determination process is compared with a rotor position anticipated as a result of the application of the appropriate voltage vector,
- wherein the appropriate voltage vector is determined by means of an association between the first rotor position and the voltage vector to be applied for the achievement of a desired rotation,
- and the second rotor position thus determined is compared with the first rotor position thus determined in order to improve the accuracy of the position identification of the rotor.

**17.** Circuit arrangement according to Claim 16, **charac-** **terized in that** this circuit arrangement is a constituent element of a circuit arrangement for the control or regulation of the brakes of a motor vehicle.

**18.** Circuit arrangement according to Claim 16 or 17, **characterized in that** on-load operation of the motor proceeds only after the error-free execution of a method according to one of Claims 1 - 15 whereby, specifically, the control system considers any difference detected between the actual and notional position of the rotor.

**19.** Use of a circuit arrangement according to one of Claims 16 - 18 in a motor vehicle.

**Revendications**

**1.** Procédé dans lequel la position du rotor à excitation permanente d'une machine synchrone à commutation électronique, qui possède un stator doté de trois enroulements de phase, est déterminée par rapport à trois capteurs de position de rotor fixes par rapport au stator et convenant pour un schéma de commutation d'une première commutation de bloc, la détermination de la position du rotor s'effectuant par lecture des données des capteurs de position, **caractérisé en ce que**

après une première détermination de la position, le rotor est tourné d'un angle prédéterminé en l'absence de charge par application d'un vecteur de tension approprié qui est déterminé à l'aide d'un schéma de commutation d'une deuxième commutation de bloc, suite à quoi une nouvelle détermination de la position du rotor est exécutée et le résultat de la deuxième détermination de la position du rotor est comparé à une position du rotor attendue suite à l'application du vecteur de tension approprié,

le vecteur de tension approprié étant déterminé à l'aide d'une association entre la première position du rotor et un vecteur de tension qui doit être appliqué pour obtenir une rotation souhaitée,

la deuxième position du rotor déterminée étant comparée à la première position déterminée du rotor pour améliorer la précision de la détection de la position du rotor.

**2.** Procédé selon la revendication 1, **caractérisé en ce qu'**un premier schéma de commutation est prédéterminé, une association étant établie entre le vecteur de tension appliqué et la position attendue du rotor.

**3.** Procédé selon au moins l'une des revendications 1 ou 2, **caractérisé en ce que** toutes les positions de rotor déterminées ultérieurement et les grandeurs qui en sont déduites sont corrigées en fonction de la comparaison entre le résultat de la deuxième détermination de la position du rotor et la position attendue du rotor.

4. Procédé selon au moins l'une des revendications 1 à 3, **caractérisé en ce que** pendant la détermination de la position du rotor, les courants qui s'écoulent dans les enroulements de phase sont limités en fonction d'informations de température et en particulier **en ce qu'**un courant limite plus élevé est sélectionné si une température plus élevée prévaut et **en ce qu'**un courant limite plus bas est sélectionné si une température plus basse prévaut.

5. Procédé selon au moins l'une des revendications 1 à 4, **caractérisé en ce que** pendant la détermination de la position du rotor, les courants qui s'écoulent dans les enroulements de phase sont limités par un branchement et un débranchement alternés des tensions appliquées sur les enroulements de phase.

6. Procédé selon l'une des revendications précédentes, **caractérisé en ce que** les positions de rotor sont indiquées sous la forme d'angles, 360° correspondant à une traversée complète du schéma de commutation, un vecteur de tension, distant de 90°, du premier schéma de commutation est appliqué après la comparaison entre la deuxième position déterminée pour le rotor et le premier schéma de commutation, suite à quoi un autre vecteur de tension, distant de 90° dans la même direction, du deuxième schéma de commutation est appliqué, une troisième position du rotor étant ensuite déterminée, et un défaut étant détecté si les données des capteurs de position correspondant à la troisième position du rotor ne sont pas inversées par rapport à celles correspondant à la deuxième position du rotor.

7. Procédé selon l'une des revendications précédentes, **caractérisé en ce qu'**ensuite au moins un autre vecteur de tension du deuxième schéma de commutation, voisin dans le sens de rotation opposé, est appliqué et ensuite une troisième position du rotor est déterminée, un défaut étant détecté si les données des capteurs de position correspondant à la troisième position du rotor ne se distinguent pas de celles correspondant à la deuxième position du rotor.

8. Procédé selon au moins l'une des revendications 2 à 6, **caractérisé en ce que** la machine synchrone à commutation électronique possède un rotor à excitation permanente et un stator doté de trois enroulements de phase ainsi que de trois capteurs de position de rotor disposés de manière appropriée pour un schéma de commutation, un vecteur de tension de base du schéma de commutation étant appliqué avant la première détermination d'une position du rotor, la détermination de la position du rotor s'effectuant par lecture des données des capteurs de position, le vecteur de tension approprié étant modifié par rapport au vecteur de tension de base dans des étapes définies et la deuxième détermination de la position du rotor ainsi que la modification du vecteur de tension approprié s'effectuant en permanence jusqu'à ce qu'une position voisine du rotor soit affichée.

9. Procédé selon la revendication 8, **caractérisé en ce que** les capteurs de position du rotor sont basés sur l'effet Hall, **en ce que** la modification pas-à-pas du vecteur de tension et la lecture des données de capteur de position s'effectuent de manière répétée, la position de rotor atteinte par application du vecteur de tension de base étant traversée dans les deux sens de rotation du moteur et les vecteurs effectifs de tension à l'instant d'une modification des données de capteur de position étant comparés au vecteur de tension de base, une mesure de l'hystérèse du capteur de position basé sur l'effet Hall dont les données se sont modifiées étant calculée à partir de là.

10. Procédé selon la revendication 9, **caractérisé en ce que** l'hystérèse de tous les capteurs de position basés sur l'effet Hall est mesurée par application d'un vecteur de tension de base voisin de chaque point de commutation et modification pas-à-pas répétée du vecteur de tension avec lecture simultanée du capteur de position concerné.

11. Procédé selon au moins l'une des revendications 8 à 10, **caractérisé en ce que** les positions de commutation du ou des capteurs de position du rotor concerné, modifiées par rapport au vecteur de tension de base, sont prises en compte par des valeurs de correction appropriées lors de la commande ultérieure de la machine synchrone à commutation électronique, une différence de position et/ou une hystérèse étant conservées en mémoire et prises en compte pour chaque capteur de position du rotor concerné.

12. Procédé selon au moins l'une des revendications 8 à 11, **caractérisé en ce que** les vecteurs de tension appropriés sont établis en appliquant des procédés connus de modulation de vecteur, les effets de temps mort étant en particulier compensés par une modification appropriée du taux d'échantillonnage particulier.

13. Procédé selon au moins l'une des revendications 8 à 11, **caractérisé en ce que** les vecteurs de tension appropriés sont modifiés au moyen du taux d'échantillonnage, par modification d'une des tensions appliquées.

14. Procédé selon au moins l'une des revendications 8 à 11, **caractérisé en ce que** les vecteurs de tension appropriés sont formés par commutation rapide entre des vecteurs de tension de base voisins.

15. Procédé selon au moins l'une des revendications 8 à 14, **caractérisé en ce qu'**une limitation du courant s'effectue par insertion brève et répétée de vecteurs nuls.

16. Circuit de commande d'une machine synchrone à commutation électronique, configuré pour déterminer la position du rotor à excitation permanente d'une machine synchrone à commutation électronique, qui possède un stator doté de trois enroulements de phase, par rapport à trois capteurs de position de rotor fixes par rapport au stator, et convenant pour un schéma de commutation d'une première commutation de bloc, la détermination de la position du rotor s'effectuant par lecture des données des capteurs de position, **caractérisé en ce que** le circuit est en outre configuré de telle sorte que :

> après une première détermination de la position, le rotor est tourné d'un angle prédéterminé en l'absence de charge par application d'un vecteur de tension approprié qui est déterminé à l'aide d'un schéma de commutation d'une deuxième commutation de bloc,
> suite à quoi une nouvelle détermination de la position du rotor est exécutée et le résultat de la deuxième détermination de la position du rotor est comparé à une position du rotor attendue suite à l'application du vecteur de tension approprié,
> le vecteur de tension approprié étant déterminé à l'aide d'une association entre la première position du rotor et un vecteur de tension qui doit être appliqué pour obtenir une rotation souhaitée,
> la deuxième position du rotor déterminée étant comparée à la première position déterminée du rotor pour améliorer la précision de la détection de la position du rotor.

17. Circuit selon la revendication 16, **caractérisé en ce qu'**il fait partie d'un circuit de commande ou de régulation des freins d'un véhicule automobile.

18. Circuit selon les revendications 16 ou 17, **caractérisé en ce que** le moteur fonctionne en charge uniquement après l'exécution sans défaut d'un procédé selon l'une des revendications 1 à 15, la commande tenant compte en particulier d'une différance détectée entre la position effective et la position de consigne du rotor.

19. Utilisation d'un circuit selon l'une des revendications 16 à 18 dans un véhicule automobile.

**Fig. 1**

**Fig. 2**

U

V$_S$

W$_S$

W

V

a)

U$_S$

U

V$_S$

W$_S$

W

V

b)

U$_S$

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008001408 A1
- US 4565957 A
- WO 2005046041 A2